# NEUE EUROPÄISCHE PATENTSCHRIFT

(11) **EP 2 138 078 B2**
(45) Veröffentlichungstag und Bekanntmachung des Hinweises auf die Entscheidung über den Einspruch: **07.01.2015**
(45) Hinweis auf die Patenterteilung: 23.06.2010
(21) Anmeldenummer: 09007862.7
(22) Anmeldetag: 16.06.2009
(51) Int. Cl.: A47J 31/60

(54) **Wassertank und damit verbindbares separat ausgebildetes Filterpatronen-Anschlusselement**
Water tank and connectable separately composed filter cartridge connection element
Réservoir d'eau et élément de raccordement à cartouches de filtres conçu séparément et pouvant être raccordé à celui-ci

(30) Priorität: 27.06.2008 DE 102008030166
(43) Veröffentlichungstag der Anmeldung: 30.12.2009
(73) Patentinhaber: Aquis Wasser-Luft-Systeme GmbH Lindau, Zweigniederlassung Rebstein, 9445 Rebstein (CH)
(72) Erfinder: Wawrla, Andreas, 9443 Widnau (CH); Scholz, Roland, 9436 Balgach (CH)
(74) Vertreter: Otten, Roth, Dobler & Partner

(56) Entgegenhaltungen:
- EP-A- 1 340 442
- EP-A1- 1 340 442
- EP-A1- 2 095 749
- EP-A2- 0 819 880
- DE-A1-102007 038 027
- DE-A1-102007 038 027
- DE-A1-102007 038 028
- DE-U1-202008 002 581
- US-A- 4 865 674
- US-A- 5 015 015
- US-A1- 2002 130 515
- J. GUEST: 'Cartridge Systems A simple cost effective way of securing tubes within your product' PRODUCT CATALOGUE September 2004, Seiten 1 - 10 & COVERING LETTER FROM JOHN GUEST LTD. IN CONNECTION WITH D9 05 Dezember 2011,

## Beschreibung

Die vorliegende Erfindung betrifft einen Wassertank und ein damit verbindbares Filterpatronen-Anschlusselement nach den Oberbegriffen der Ansprüche 1 und 12.

### Stand der Technik

Zur Aufbereitung von vorzugsweise aus Wasserleitungsversorgungssystemen stammendem Rohwasser ist die Verwendung von Filtersystemen bekannt. Für nicht an ein Wasserleitungssystem angebundene Geräte oder Filtervorrichtungen ist die Verwendung eines Wassertanks zur Bevorratung des aufzubereitenden Rohrwassers bekannt.

Das Dokument EP 1 340 442 zeigt solch ein Filtersystem.

Geräte können z.B. jegliche Getränkeaufbereitungsmaschinen, wie Kaffee-, Tee- oder Trinkwasseraufbereitungsmaschinen sein. Filtervorrichtungen können z.B. Tischfilterkannen oder der gleichen sein. Für beide ist sowohl ein Saugbetrieb als auch ein gravimetrischer Betrieb grundsätzlich möglich. Beim Saugbetrieb ist vorzugsweise eine Saugvorrichtung, wie z.B. eine Pumpe vorgesehen. Beim gravimetrischen Betrieb wird das zu filternde Rohwasser durch Schwerkraft, vorzugsweise von einem ersten Gefäß in ein zweites, darunter liegend angeordnetes Gefäß geleitet, was z.B. jeweils ein Tank sein kann.

Wesentlich für die Qualität des aufbereiteten Wassers ist neben der Wirkungsweise der das Rohwasser aufbereitenden Mittel aber auch die Qualität des Rohwassers selbst. Abhängig von dieser Rohwasserqualität und vom jeweiligen Einsatzzweck können die das Rohwasser aufbereitenden Mittel zum Teil massiv in ihrer Zusammensetzung, Konzentration und/oder Wirkungsweise variieren. Um sicherzustellen, dass für den jeweiligen Einsatzzweck nur die betriebsbedingt vorgesehenen Wasseraufbereitungsmittel verwendet werden können, kann am Tank eine Filterpatronen-Anschlussvorrichtung vorgesehen werden, welche genau zu einer bestimmten, komplementären Anschlussstruktur eines filterpatronenseitigen Tankanschlusselementes passt.

### Aufgabe

Der vorliegenden Erfindung liegt die Aufgabe zugrunde, einen Wassertank sowie eine für den Wassertank vorgesehene Filterpatronen-Anschlussvorrichtung entsprechend des einleitend dargelegten Standes der Technik zu verbessern.

Die Lösung dieser Aufgabe erfolgt, ausgehend von den Oberbegriffen der Ansprüche 1 und 12, durch deren kennzeichnende Merkmale.

Durch die in den Unteransprüchen angeführten Merkmale sind vorteilhafte Ausführungen und Weiterbildungen der Erfindung möglich.

Dementsprechend betrifft die vorliegende Erfindung in einem ersten Aspekt einen Wassertank nach dem Oberbegriff des Anspruchs 1.

Die nicht mehr zerstörungsfrei lösbare Fixierung bezieht sich dabei auf betriebsübliche Verbindungsbelastungen, wie sie beim Einsetzten und Wechseln von Filterpatronen auftreten. Ein Wiedertrennen der einmal so zusammen gefügten Kombination aus Filterpatronen-Anschlussvorrichtung und Wassertank soll hiermit unter solchen betriebsüblichen Beanspruchungen zuverlässig verhindert werden. Aber auch einer Demontage unter Verwendung eines Werkzeugs, wie z.B. einem Schraubendreher oder einer Zange, sollen diese Einweg-Fixiermittel zumindest im Rahmen eines nicht auf Zerstörung auslegten Austauschversuches wiederstehen.

Die Verwendung solcher Fixiermittel, die nachfolgend auch als Einweg-Fixiermittel bezeichnet werden, hat den Vorteil, dass dadurch ein Manipulationsschutz für eine genau definierte Schnittstelle zwischen dem Wassertank und den für die Aufbereitung des Rohwassers vorgesehenen Wasseraufbereitungsmitteln zur Verfügung gestellt werden kann, wobei die Schnittstelle z.B. durch die beiden zu einander komplementären Strukturen der tankseitigen Filterpatronen-Anschlussvorrichtung und eines ihr zugeordneten, filterpatronenseitigen Tankanschlusselementes ausgebildet sein kann.

Die Einweg-Fixiermittel verhindern somit zuverlässig ein ungewolltes Abziehen des Filterpatronen-Tankanschlusselementes beim Wechsel einer Filterpatrone. Sie verhindert weiterhin aber auch sowohl ungewollte als auch gewollte Manipulationen an der Schnittstelle zwischen Wassertank und Filterpatrone, so dass dadurch nur solche Filterpatronen eingesetzt werden können, die vom Tankhersteller auch vorgesehen sind.

Unter Filtermittel wird erfindungsgemäß jedes Mittel zur Aufbereitung des damit in Kontakt kommenden Wassers verstanden. Neben Mittel zum Entzug von ggf, nicht erwünschten, im aufzubereitenden Wasser enthaltenen Stoffen sollen hiervon insbesondere auch Mittel zu dessen Anreicherung umfasst sein.

Unter einer Filterpatrone wird erfindungsgemäß ein Filtermittel beinhaltendes Gehäuse verstanden, welches eine mechanische Anschlussstruktur zur Verbindung mit einer Filterpatronen-Anschlussvorrichtung aufweist.

Unter einer Filterpatronen-Anschlussvorrichtung wird erfindungsgemäß ein separat vom Wassertank gefertigter und mit diesem vorzugsweise dichtend verbindbarer Körper verstanden, der eine zu einer Anschlussstruktur einer Filterpatrone komplementäre Anschlussstruktur aufweist.

In einer möglichen Ausführungsform können die Fixiermittel mit der Oberfläche des Tanks und/oder des Anschlusselementes eine Haftverbindung ausbilden.

Unter einer Haftverbindung wird erfindungsgemäß, im Sinne der Definition nach Duden (haften gleich festhängen), eine zwei separate Teile fest miteinander verbindende Verbindung verstanden, die unter betriebsüblichen Bedingungen (regelmäßig Filterpatronen einsetzen und wieder entnehmen) dauerhaft stabil ist. Eine solche Haftverbindung unterscheidet sich aufgrund der ihr innewohnenden Wirkungsweise "haften" sowohl von einer Schraubverbindung als auch von einer Klemmverbindung, die ihre fixierende Wirkung eben aus den sie beschreibenden Wirkungen "schrauben", wie verschrauben oder dgl., bzw. "klemmen" im Sinne von zusammendrücken beziehen.

Erfindungsgemäss sind die Fixiermittel so ausgebildet, dass sie die Oberfläche des Tanks und/oder des Anschlusselementes strukturell verändernde und/oder beschädigende Mittel, insbesondere Strukturen aufweisen. Dadurch können sich diese Einweg-Fixiermittel sozusagen in der Oberfläche des Tanks und/oder an einem an ihm ausgebildeten Aufnahmeelement festsetzen, insbesondere festkrallen, z.B. widerhackenförmig. Das gleiche gilt sinngemäß für eine Verbindung mit dem Filterpatronen-Anschlusselement oder einem an ihm ausgebildeten Aufnahmeelement.

In einer weiteren, bevorzugten Ausführungsform können die Fixiermittel auch eine Pressverbindung zwischen der Oberfläche des Wassertanks und/oder der Anschlussvorrichtung ausbilden, ggf. auch in Kombination mit der oben beschriebenen, die Oberfläche eines oder beider zu verbindender Elemente beschädigende Strukturen aufweisenden Ausführungsform. Beispielsweise kann hierfür eine mehrschichtige Struktur vorgesehen sein, von der eine Schicht einen Teil der Oberfläche der Filterpatronen- Anschlussvorrichtung ausbildet, ein weiterer Teil ein Einweg-Fixiermittel und eine dritte Schicht ein dem Tank oder einem entsprechenden Aufnahmeelement zugeordneter Oberflächenbereich ist. Sofern der Abstand zwischen der Oberfläche der Filterpatronen-Anschlussvorrichtung und der Oberfläche des Wassertanks kleiner ist, als ein zwischen diesen beiden angeordnetes Einweg-Fixiermittel werden alle drei an den jeweiligen Berührstellen gegeneinander gepresst und können so eine entsprechende Pressverbindung ausbilden, insbesondere bevorzugt unter oben beschriebener Strukturveränderung der betreffenden Oberflächenbereiche der beiden mit einander zu verbindenden Teile.

In einer besonders bevorzugten Ausführungsform können die Fixiermittel blättchenförmige Einschub- und/oder Einlegeelemente umfassen, die beispielsweise zur Vorbereitung der Verbindung der Filterpatronen-Anschlussvorrichtung mit dem Tank in und/oder an einer entsprechend ausgebildeten Aufnahme vorbereitend fixiert sein können, um nach dem Zusammenfügen der Filterpatronen-Anschlussvorrichtung mit dem Tank diese vorzugsweise nicht mehr wieder voreinander lösbar fest miteinander verbinden.

In einer davon abgewandelten Ausführungsform können die Fixiermittel z.B. auch in der Form eines geschlossenen oder auch offenen Schneidringes ausgebildet sein, welcher ein Ein- bzw. Aufschieben in die eine Richtung ermöglicht, und bei einer Bewegung in die entgegengesetzte Richtung eine schneidende und/oder krallende Wirkung durch ein Verhaken an der Oberfläche bzw. ein Einschneiden in die Oberfläche des betreffenden Gegenelementes bewirkt. Ein diese Schneidwirkung bewirkendes Element kann dabei radial nach Innen weisend und/oder radial nach Außen wirkend ausgebildet sein. Hierzu ist beispielsweise ein einzelnes, im Umfangsverlauf ggf. geteiltes Element mit jeweils unterschiedlichen Ausrichtung ausbildbar. Denkbar sind aber auch Ausführungsformen, bei denen zwei oder mehrere, vorzugsweise separat ausgebildete Schneidelemente vorgesehen sind, die in wenigstens eine der beiden entgegengesetzten Richtungen, radial einwärts bzw. radial auswärts, orientiert sind. Denkbar sind aber auch Ausführungsformen bei denen zwei oder mehrere Schneidelemente in die gleiche Richtung, radial einwärts und/oder radial auswärts ausgerichtet, ausgebildet sind. Weiter vorteilhaft kann es sein, wenn ein tankseitiges Verbindungselement zur Wechselwirkung mit den Fixiermitteln vorgesehen ist. Ein solches kann beispielsweise verhältnismäßig einfach bei der Herstellung des Tanks an diesem angespritzt werden und stellt eine leicht zu erreichende Verbindungsmöglichkeit dar. Ein weiterer Vorteil eines solchen tankseitigen Verbindungselementes kann in einer gezielt vorgebbaren, mechanischen Stabilität liegen, die einerseits ein Standhalten der betriebsüblichen Belastung durch Einsetzen und Entnehmen einer Filterpatrone bei deren Wechsel über den gesamten Betriebszeitraum des Tanks hinweg zuverlässig gewährleistet, andererseits aber bei einem unzulässigen Manipulationsversuch z.B. abbricht, um so sicherstellen zu können, dass die ursprünglich in den Wassertank eingesetzte Filterpatronen-Anschlussvorrichtung nicht einfach durch ein anderes ersetzt werden kann. Sinngemäß die gleiche Funktion und Wirkung kann ein weiter vorteilhaft an der Filterpatronen-Anschlussvorrichtung ausgebildetes, entsprechendes Verbindungselement aufweisen.

In einer weiter bevorzugten Ausführungsform kann die Filterpatronen-Anschlussvorrichtung im Bereich des Wasserauslasses des Tanks mit diesem Verbunden sein. Dies hat den Vorteil, dass das im Tank befindliche Rohwasser nach Durchlaufen der Filterstrecke direkt aus dem Tank herausgeleitet werden kann.

Insbesondere vorteilhaft ist es hierbei, wenn eine Dichtstruktur vorgesehen ist, die eine Abdichtung zwischen dem Tank und der Filterpatronen-Anschlussvorrichtung und/oder zwischen diesem und der Filterpatrone ausbildet.

Weiter vorteilhaft kann es sein, wenn eine Kodierstruktur vorgesehen ist. Auch diese kann entweder zwischen dem Tank und dem Filterpatronen-Anschlusselement ausgebildet sein, insbesondere bevorzugt aber an der Filterpatronen-Anschlussvorrichtung, so dass nur entsprechen kodierte Filterpatronen daran eingesetzt werden können.

Im Weiteren betrifft die vorliegende Erfindung auch eine Anschlussvorrichtung zum Anschluss einer Filterpatrone im Inneren eines Wassertanks, wobei die Anschlussvorrichtung als vom Wassertank separates Bauteil ausgebildet ist und Fixiermittel zur einmaligen und danach nicht mehr zerstörungsfrei lösbaren Fixierung der Anschlussvorrichtung im Wassertank aufweist.

Diese Fixiermittel können je nach Ausführungsform eines oder mehrere der Merkmale der oben beschriebenen Fixiermittel für eine zum Anschluss an einen Wassertank vorgesehene Filterpatronen-Anschlussvorrichtung aufweisen. Die Bereitstellung einer solchen für eine Grundausstattung und/oder eine Nachrüstung eines Wassertanks vorgesehenen Filterpatronen-Anschlussvorrichtung hat z.B. den Vorteil, dass eine einzige Form eines Tanks mit unterschiedlichen Standardanschlüssen verschiedener patronenseitiger Kodierstrukturen modular aufbaubar ist. Dadurch ist es möglich, mit einem einzigen Spritzwerkzeug zur Herstellung eines Wassertanks eine ganze Reihe unterschiedlicher Anwendungsfälle mit jeweils speziell hierfür vorgesehenen Wasserfilterpatronen zu bedienen, wobei sichergestellt werden kann, dass jeweils nur die für den bestimmten Anwendungszweck vorgesehene Wasserfilterpatrone in den betreffenden Wassertank passt und somit Manipulationsmöglichkeiten zuverlässig verhindert werden können.

Die Anwendungszwecke können z.B. hinsichtlich der Qualität des zuzuführenden Wasser unterschieden werden, sie können aber auch hinsichtlich der Geräte in denen die Wasserfilterpatronen Verwendung finden sollen unterschieden werden, um beispielsweise unterschiedlichen Qualitätsansprüchen für das durch die Filterpatrone aufzubereitende Wasser gerecht zu werden. Ein weiterer, wirtschaftlicher Vorteil liegt in den reduzierten Herstellungs- und/oder Logistikkosten eines Wassertank-Herstellers, der ggf. verschiedene Gerätehersteller mit genau auf die jeweiligen Geräteanforderungen spezifizierten Tanks beliefern kann, wobei der Wassertank an sich jedoch immer die selbe Form aufweisen kann. So kann der Gerätehersteller z.B. einen Exklusivfilter einsetzten, der durch die Ausstattung der erfindungsgemäßen Filterpatronen-Anschlussvorrichtung in vorteilhafter Weise exklusiv kodiert mit einem Standardtank kombiniert werden kann.

### Figurenbeschreibung:

Ein Ausführungsbeispiel der Erfindung ist in den beigefügten Zeichnungen dargestellt und wird anhand der nachfolgenden Figurenbeschreibung näher erläutert.

Es zeigen:
- Figur 1: beispielhaft und schematische eine perspektivische Draufsicht auf einen Wassertank und eine damit verbindbare Filterpatronen-Anschlussvorrichtung mit darin eingesetzter Filterpatrone,
- Figur 2: eine Unteransicht auf ein Filterpatronen- Anschlussvorrichtung und eine darin eingesetzte Filterpatrone,
- Figur 3: beispielhaft eine perspektivische Ansicht einer Filterpatronen-Anschlussvorrichtung sowie daran angeordneter Fixiermittel,
- Figur 4: beispielhaft und schematisch eine Schnittdarstellung durch einen Wassertank mit daran fixierter Filterpatronen-Anschlussvorrichtung und einer darin eingesetzten Filterpatrone und
- Figur 5: schematisch in perspektivischer Ansicht ein beispielhaftes Fixiermittel zur Festsetzung der Filterpatronen-Anschlussvorrichtung am Wassertank.

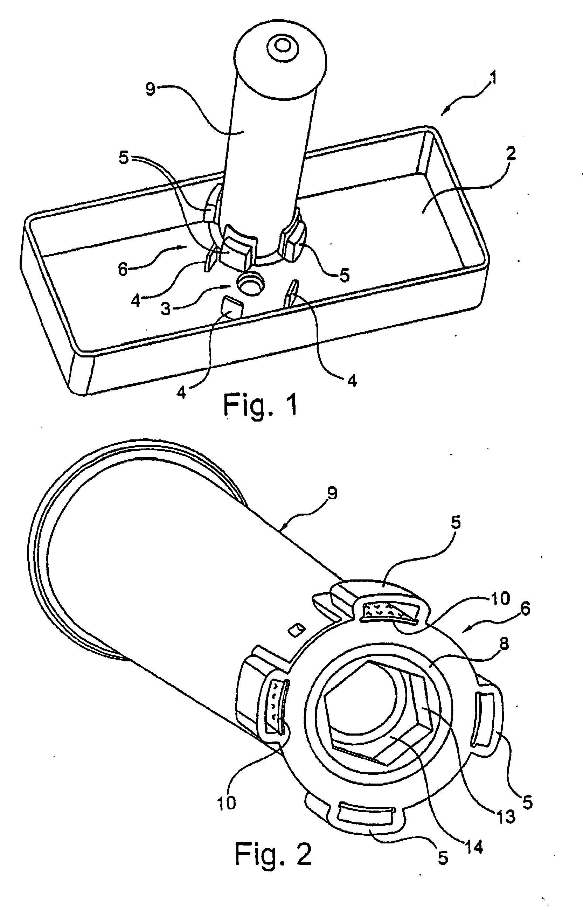

Dementsprechend zeigt die Fig. 1 schematisch und beispielhaft einen Teil eines Wassertanks 1 mit in dessen Boden 2 ausgebildetem Tankauslass 3, um den sichtbar drei tankseitige Verbindungselemente 4 beispielhaft kreisförmig herum angeordnet sind, z.B. durch Anspritzen an den Tankboden. Diese Verbindungselemente sind hier beispielhaft flügelartig als komplementäre Struktur zu weiteren, an einer mit dem Tank fest zu verbindenden Filterpatronen-Anschlussvorrichtung 6 ausgebildeten, taschenförmigen Verbindungselementen vorgesehen.

Diese taschenförmigen Verbindungselemente 5 der Filterpatronen-Anschlussvorrichtung 6 sind, ebenfalls beispielhaft, über einen ringförmigen Körper 7 miteinander verbunden. Zwischen diesem Körper 7 und dem Tankboden ist ein Dichtmittel 8 vorgesehen, welches beispielsweise als O-Ring in eine ggf. vorgesehene Nut eingelegt sein kann (Fig. 2.) Damit ist bei einfacher Montage eine zuverlässige Abdichtung zwischen dem Rohwasser enthaltenden Innenraum des Tanks 1 und dem davon durch die Filterpatronen-Anschlussvorrichtung 6 und einer darin eingesetzten Filterpatrone 9 getrennten Auslass des Wassertanks möglich.

Erfindungsgemäß sind Fixiermittel 10 zur Fixierung der Filterpatronen-Anschlussvorrichtung 6 am Wassertank 1 vorgesehen, die so ausgebildet sind, dass die Filterpatronen-Anschlussvorrichtung zerstörungsfrei nicht mehr vom Tank lösbar ist. Diese Fixiermittel werden nachfolgend auch als Einweg-Fixiermittel 10 bezeichnet, sind in der hier beispielhaft dargestellten Ausführungsform blättchenförmig ausgebildet und in die Taschen 11 des Verbindungselementes 5 eingesteckt. Beim Aufstecken der Filterpatronen-Anschlussvorrichtung 6 auf die tankseitigen Verbindungselemente 4 verkrallen sich diese mit in der Art von Widerhaken aufweisenden und von seiner Oberfläche flügelförmig nach außen stehenden Krallelementen 12 so in die jeweils ihnen zugewandte Oberfläche des tankseitigen Verbindungselementes 4 bzw, der Tasche 11 des Verbindungselementes 5 der Filterpatronen- Anschlussvorrichtung 6, dass sie mit dieser eine dauerhafte Haftverbindung im Sinne eines Verhakens und Festhängens der jeweiligen Oberflächen miteinander bewirken. Ein beschädigungsfreies Wiederlösen der Filterpatronen-Anschlussvorrichtung 6 vom Tank 1 bzw. von dessen Verbindungselementen 4 ist hierdurch nicht mehr möglich.

Damit kann über die Betriebsdauer des Wassertanks ein regelmäßiges Austauschen der einzusetzenden Filterpatronen 9 einfach und zuverlässig ohne ein lösen der Verbindung zwischen Wassertank und Filterpatronen-Anschlussvorrichtung gewährleistet werden.

Weiterhin kann auch sichergestellt werden, dass keine Manipulationen durch einen Austausch einer einmal eingesetzten Filterpatronen-Anschlussvorrichtung durch eine andere möglich sind.

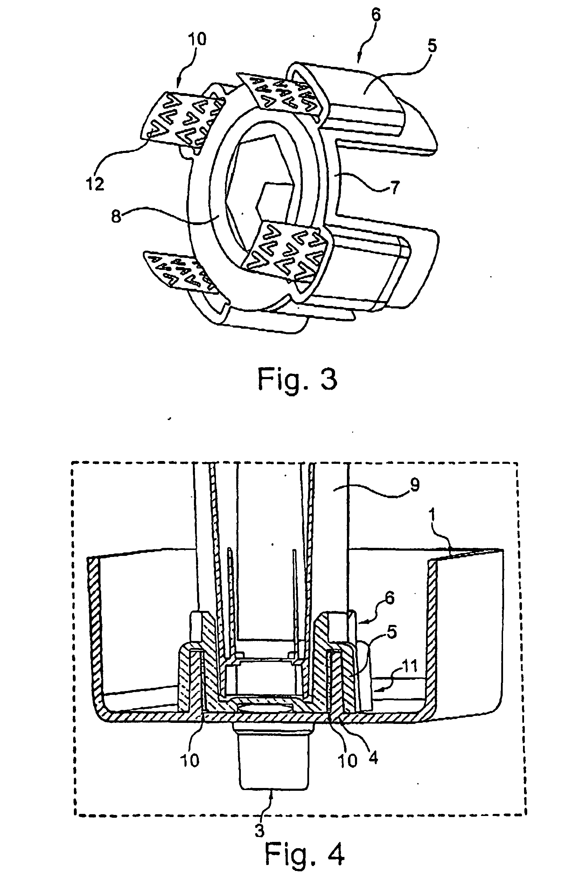

Die Darstellung der Fig. 3 zeigt die Filterpatronen-Anschlussvorrichtung mit an ihren taschenförmig ausgebildeten Verbindungselementen 5 leicht eingesteckten Einweg-Fixiermitteln. Hierbei kann es sich beispielsweise um den Montagezustand der Filterpatronen-Anschlussvorrichtung handeln, bevor der Tank mit ihr durch Aufschieben bestückt wird. Beim Aufschieben der Filterpatronen-Anschlussvorrichtung 6 auf die Verbindungselemente 4 des Tanks 1 verkrallen sich die Krallelemente 12 der Einweg-Fixiermittel 10 sowohl mit den betreffenden Oberflächenbereichen der Filterpatronen-Anschlussvorrichtung 6 im Inneren der taschenförmig ausgebildeten Verbindungselemente 5 als auch mit den ihnen zugewandten Oberflächen der beim Aufstecken von den Taschen 11 umschlossenen, tankseitigen Verbindungselemente 4.

Nach dem Aufstecken der Filterpatronen- Anschlussvorrichtung auf den Tank befinden sich alle für die Verbindung dieser beiden Teile miteinander wesentlichen Elemente im Inneren der Taschen 11 und sind somit zumindest im Rahmen einer nicht Material zerstörenden Manipulation geschützt (Fig. 4).

In der Fig. 4 ist beispielhaft und schematisch eine Schnittdarstellung durch einen Tank gezeigt, welcher mit einer entsprechend aufgesteckten Filterpatronen-Anschlussvorrichtung versehen und mittels erfindungsgemäßer Einweg-Fixiermittel 10 fixiert ist.

In einer davon abgewandelten Ausführungsform können die hier mehrfach als einzelne, taschenförmig ausgebildeten Verbindungselemente 5 als ein wenigstens teilweise umlaufend ausgebildetes Element, ggf. mit zwischenliegenden Unterbrechungen ausgebildet sein, in welchem anstelle der bisher beschriebenen, blättchenförmigen Einweg-Fixiermittel 10 eine Ausführungsform als geschlossen oder unterbrochen ausgebildeter Schneidringe 10 einsetzbar ist. In dieser Ausführungsform würde die Fig. 4 dementsprechend wiederum eine entsprechende Schnittdarstellung zeigen, in der die Position 10 dann den Schneidring 10 darstellt. Dieser kann Schneidmittel aufweisen, die entweder rundumlaufend durchgehend oder unterbrochen ausgebildet sind, und/oder sinngemäß entsprechend der als Krallelemente 12 ausgebildeten Schneidmittel der blättchenförmigen Verbindungselemente 4. Diese Schneidmittel können wahlweise radial einwärts und/oder radial auswärts gerichtet ausgebildet sein, sie können, ggf. auch mehrfach und mehrteilig, und zwar sowohl radial einwärts als auch radial auswärts ausgebildet sein.

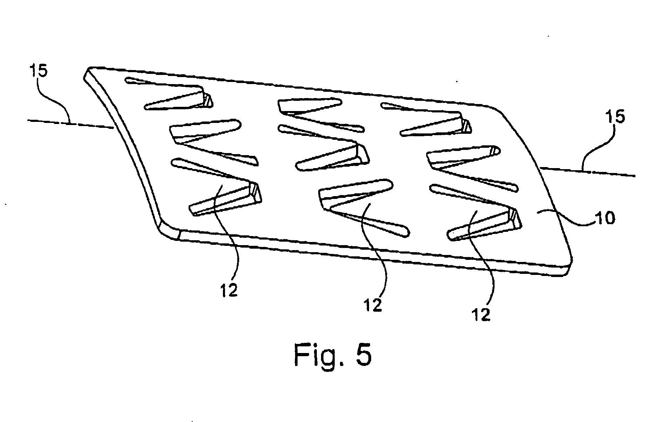

In der Filterpatronen-Anschlussvorrichtung 6 ist eine Filterpatrone 9 eingesetzt, die eine zu einer an der Filterpatronen-Anschlussvorrichtung 6 ausgebildeten, beispielhaft als Sechskant dargestellten Kodierstruktur 13 komplementäre Kodierstruktur 14 aufweist (Fig. 2). Das erfindungsgemäße, blättchenförmig dargestellte, Krallenelemente 12 aufweisende Einweg-Fixiermittel 10 ist in vergrößerter Ansicht beispielhaft in Fig. 5 dargestellt. Hierin ist z.B. auch eine leichte Abrundung des blättchenförmigen Körpers 10 über eine Körperachse 15 gezeigt, die beispielsweise zur Anpassung an den Kreisbogenform, dienen könnte, die durch die vier tankseitigen Verbindungselemente 4 ausgebildet wird, von denen nur 3 in der Fig. 1 sichtbar dargestellt sind. Eine weitere Funktionsweise dieser leichten Abrundung kann z.B. aber auch eine fixierende Spannwirkung beim Einsetzen dieser blättchenförmigen Einweg-Fixiermittel in die taschenförmigen Verbindungselemente 5 sein, so dass sie beim bzw. nach dem Bestückungsprozess nicht aus diesem heraus fallen können.

### Bezugszeichenliste:

- 1: Wassertank
- 2: Boden
- 3: Tankauslass
- 4: Verbindungselement
- 5: Verbindungselement
- 6: Filterpatronen-Anschlussvorrichtung
- 7: Körper
- 8: Dichtmittel
- 9: Filterpatrone
- 10: Einweg-Fixiermittel
- 11: Tasche
- 12: Krallenelement
- 13: Kodierstruktur
- 14: Kodierstruktur
- 15: Körperachse

## Patentansprüche

1. Wassertank (1), insbesondere für Getränkeautomaten, wie Kaffeemaschinen, Wasseraufbereitungsgeräte oder dgl., wobei eine vom Wassertank separat ausgebildete Filterpatronen-Anschlussvorrichtung (6) vorgesehen ist, die Fixiermittel (10) zur einmaligen und danach nicht mehr zerstörungsfrei lösbaren Fixierung der Anschlussvorrichtung im Wassertank aufweist, **dadurch gekennzeichnet, dass die Fixiermittel (10) die Oberfläche des Tanks und/oder des Anschlusselementes strukturell beschädigende Strukturen (18) aufweisen.**

2. Wassertank nach Anspruch 1, **dadurch gekennzeichnet, dass** die Fixiermittel (10) mit der Oberflache des Tanks (1) und/oder des Anschlusselementes (6) eine Haftverbindung ausbilden.

3. Wassertank nach Anspruch 1 oder 2 **dadurch gekennzeichnet, dass** die Fixiermittel eine Pressverbindung zwischen der Oberfläche des Tanks und/oder des Anschlusselementes ausbilden.

4. Wassertank nach einem der vorangehenden Ansprüche, **dadurch gekennzeichnet, dass** die Fixiermittel (10) eine widerhakenförmige Struktur (12) umfassen.

5. Wassertank nach einem der vorangehenden Ansprüche, **dadurch gekennzeichnet, dass** die Fixiermittel (10) einen Schneidring (10) umfassen.

6. Wassertank nach einem der vorangehenden Ansprüche, **dadurch gekennzeichnet, dass** die Fixiermittel (10) blättchenförmige Einschub- und/oder Einlegeelemente umfassen.

7. Wassertank nach einem der vorangehenden Ansprüche, **dadurch gekennzeichnet, dass** ein tankseitiges Verbindungselement (4) zur Wechselwirkung mit Fixiermitteln (10) vorgesehen ist.

8. Wassertank nach einem der vorangehenden Ansprüche, **dadurch gekennzeichnet, dass** am Filterpatronen-Anschlusselement (6) ein Verbindungselement (5) zur Wechselwirkung mit Fixiermitteln (10) vorgesehen ist.

9. Wassertank nach einem der vorangehenden Ansprüche, **dadurch gekennzeichnet, dass** das Filterpatronen-Anschlusselement im Bereich eines Wasserauslasses (3) mit dem Tank verbunden ist.

10. Wassertank nach einem der vorangehenden Ansprüche, **dadurch gekennzeichnet, dass** eine Dichtstruktur (8) vorgesehen ist.

11. Wassertank nach einem der vorangehenden Ansprüche, **dadurch gekennzeichnet, dass** eine Kodierstruktur (13, 14) vorgesehen ist.

12. Filterpatronen-Anschlussvorrichtung (6) zum Anschluss einer Filterpatrone im Inneren eines Wassertanks (1), **dadurch gekennzeichnet, dass** die Anschlussvorrichtung (6) als vom Wassertank separates Bauteil ausgebildet ist und die Oberfläche des Tanks und/oder des Anschlusselementes **strukturell beschädigende Strukturen (18) aufweisende** Fixiermittel (10) zur einmaligen und danach nicht mehr zerstörbaren Fixierung der Anschlussvorrichtung im Wassertank aufweist.

## Claims

1. Water tank (1), in particular for automatic beverage machines, such as coffee machines, water preparation appliances or the like, where a filter cartridge connecting device (6) is provided, which is designed to be separate from the water tank, said filter cartridge connecting device comprising fixing means (10) for fixing the connecting device in the water tank such that it is fixed once and then can no longer be detached without being destroyed, **characterised in that** the fixing means (10) comprise structures (18) which structurally damage the surface of the tank and/or of the connecting element.

2. Water tank according to claim 1, **characterised in that** the fixing means (10) form an adhesive connection with the surface of the tank (1) and/or of the connecting element (6).

3. Water tank according to claim 1 or 2, **characterised in that** the fixing means form a press-fit connection between the surface of the tank and/or of the connecting element.

4. Water tank according to one of the preceding claims, **characterised in that** the fixing means (10) have a barb-like structure (12).

5. Water tank according to one of the preceding claims, **characterised in that** the fixing means (10) comprise a cutting ring (10).

6. Water tank according to one of the preceding claims, **characterised in that** the fixing means (10) comprise leaf-like Insert and/or inlay elements.

7. Water tank according to one of the preceding claims, **characterised in that** a tank-side connecting element (4) for interacting with the fixing means (10) is provided.

8. Water tank according to one of the preceding claims, **characterised in that** a connecting element (5) for interacting with fixing means (10) is provided on the filter cartridge connecting element (6).

9. Water tank according to one of the preceding claims, **characterised in that** the filter cartridge connecting element is connected to the tank in the region of a water outlet (3).

10. Water tank according to one of the preceding claims, **characterised in that** a sealing structure (8) is provided.

11. Water tank according to one of the preceding claims, **characterised in that** a coding structure (13, 14) is provided.

12. Filter cartridge connecting device (6) for connecting a filter cartridge in the interior of a water tank (1), **characterised in that** the connecting device (6) is designed as a component which is separate from the water tank and comprises fixing means (10), which comprise structures (18) that structurally damage the surface of the tank and/or of the connecting element, for fixing the connecting device in the water tank such that it is fixed once and then can no longer be detached without being destroyed.

## Revendications

1. Réservoir d'eau (1), notamment pour des distributeurs automatiques de boissons tels que des machines à café, des appareils distributeurs d'eau ou appareils analogues,
avec
un dispositif de raccordement de cartouches de filtre (6), réalisé séparément du réservoir d'eau, comportant des moyens de fixation (10) pour la fixation une seule fois et puis non détachable sans destruction du dispositif de raccordement au réservoir d'eau,
**caractérisé en ce que**
les moyens de fixation (10) comportent des structures (18) qui abîment structurellement la surface extérieure du réservoir et/ou de l'élément de raccordement.

2. Réservoir d'eau selon la revendication 1,
**caractérisé en ce que**
les moyens de fixation (10) réalisent une liaison par accrochage à la surface du réservoir (1) et/ou de l'élément de raccordement (6).

3. Réservoir d'eau selon selon la revendication 1 ou 2,
**caractérisé en ce que**
les moyens de fixation réalisent une liaison pressée entre la surface du réservoir et/ou l'élément de raccordement.

4. Réservoir d'eau selon l'une des revendications précédentes,
**caractérisé en ce que**
les moyens de fïxation (10) comportent une structure en forme de crochet de retenue (12).

5. Réservoir d'eau selon l'une des revendications précédentes,
**caractérisé en ce que**
les moyens de fixation (10) comportent un anneau de coupe (10).

6. Réservoir d'eau selon l'une des revendications précédentes,
**caractérisé en ce que**
les moyens de fixation (10) comportent un élément en forme de lamelle qui s'introduit par coulissement et/ ou par insertion.

7. Réservoir d'eau selon l'une des revendications précédentes,
**caractérisé par**
un élément de liaison (4) côté réservoir pour coopérer avec les moyens de fixation (10).

8. Réservoir d'eau selon l'une des revendications précédentes,
**caractérisé en ce que**
l'élément de raccordement de cartouche de filtre (6) comporte un élément de liaison (5) pour coopérer avec les moyens de fixation (10).

9. Réservoir d'eau selon l'une des revendications précédentes,
**caractérisé en ce que**
l'élément de raccordement de cartouche de filtre est relié au réservoir au niveau de la sortie d'eau (3).

10. Réservoir d'eau selon l'une des revendications précédentes,
**caractérisé par**
une structure d'étanchéité (8).

11. Réservoir d'eau selon l'une des revendications précédentes,
**caractérisé par**
une structure de codage (13, 14).

12. Dispositif de raccordement de cartouches de filtre (6) pour raccorder une cartouche de filtre à l'intérieur d'un réservoir d'eau (1),
**caractérisé en ce que**
le dispositif de raccordement (6) est réalisé sous la forme d'un composant distinct du réservoir d'eau, et il comporte des moyens de fixation (10), qui comportent des structures (18) qui abîment structurellement la surface extérieure du réservoir et/ou de l'élément de raccordement, pour fixer une seule fois, qui n'est plus détachable après sans destruction du dispositif de raccordement au réservoir d'eau.
